(19)

Europäisches Patentamt
European Patent Office
Office européen des brevets

(11) **EP 3 176 955 A1**

(12) **EUROPEAN PATENT APPLICATION**

(43) Date of publication:
**07.06.2017 Bulletin 2017/23**

(51) Int Cl.:
**H04B 7/02** *(2017.01)*  **H04W 28/16** *(2009.01)*
**H04W 36/00** *(2009.01)*

(21) Application number: **16154138.8**

(22) Date of filing: **03.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.12.2015 IN 6521CH2015**

(71) Applicant: **Wipro Limited**
**560 035 Karnataka (IN)**

(72) Inventors:
• **CHAUDHURI, Saptarshi**
**Bangalore**
**560068 Karnataka (IN)**
• **MANNA, Avijit**
**Kolkata**
**700039 West Bengal (IN)**
• **PAL, Shyam Sundar**
**Kolkata**
**700039 West Bengal (IN)**

(74) Representative: **Finnegan Europe LLP**
**16 Old Bailey**
**London EC4M 7EG (GB)**

(54) **METHOD AND SYSTEM FOR COORDINATION MULTI POINT SET DETERMINATION FOR A WIRELESS NETWORK**

(57) This disclosure relates generally to methods and systems for advanced Coordination Multi Point (CoMP) set determination in a wireless network. In one embodiment, a coordinated multipoint set determination system is provided. The system comprises a hardware processor and a memory storing instructions executable by the hardware processor for identifying a default coordinated multipoint set of neighboring base stations for each user equipment associated with the serving base station; identifying, for a selected user equipment, a set of neighboring base station candidates based on distances between the selected user equipment and neighboring base stations; identifying an intermediate coordinated multipoint set of neighboring base stations for the selected user equipment based on one or more wireless communication parameters; choosing coordinated multipoint set of neighboring base stations; and setting the chosen coordinated multipoint set of neighboring base stations as a final coordinated multipoint set for the selected user equipment for coordinated multipoint communication.

FIG. 1

EP 3 176 955 A1

**Description**

Background

A 3GPP Long Term Evolution (LTE) network is a cellular network that consists of cells managed by base stations. The cells are typically associated with a particular geographic location. A user equipment (UE) located at a particular cell can use the cellular network by transmitting and receiving data to a serving base station (SBS) that manages the cell. As the UE moves to the cell edge, it can experience a poor throughput from the serving base station, leading to poor quality of service. The system throughput of the serving base station can also be affected.

3GPP specification (TR 36.819 V11.1.0, section 4) proposes Coordinated Multipoint (CoMP) transmission and reception as a method to solve the cell edge throughput problem. Under this scheme, a number of base stations within a CoMP set can coordinate data transmission to and from a UE, to maintain the data throughput. However, 3GPP specification does not provide any mechanism about how to determine a CoMP set for the UE to include neighboring base stations (NBS). One known method is forming a CoMP set to include neighboring base stations based on the signal strength, signal quality, and channel-state-information reported by a UE at any location, and all of the neighboring base stations in the CoMP set are allowed to provide data transmission to the UE. However, the set is not maintained or updated taking the UE mobility into consideration.

The inventors here have recognized several technical problems with such a method, as explained below. First, without taking the UE's mobility into account, the CoMP set can include an improper neighboring base station (e.g., the station cannot provide a requisite throughput or quality of service to the UE). Second, by allowing all of the NBS in the CoMP set to provide data transmission, there can be severe interference. Third, by accepting all the measurement report parameters like signal strength, signal quality and channel-state-Information from the UE, the determination of CoMP set can lead to unnecessary signaling and data buffering for the network. Excessive network processing overhead may result, which leads to delayed CoMP set formation. The latency can also adversely affect the quality of service provided to the UE.

**SUMMARY**

Embodiments of the present disclosure present technological improvements as solutions to one or more of the above-mentioned technical problems recognized by the inventors in conventional systems. For example, in one embodiment, a coordinated multipoint set determination system is provided. The system comprises a hardware processor; and a memory storing instructions executable by the hardware processor for: obtaining, via the hardware processor, serving base station information for a serving base station, and neighboring base station information for a plurality of neighboring base stations for the serving base station; determining, via the hardware processor, an initial coordinated multipoint region based on the neighboring base station information and the serving base station information; identifying, via the hardware processor, a default coordinated multipoint set of neighboring base stations for each user equipment associated with the serving base station; selecting, via the hardware processor, one of the user equipment associated with the serving base station as a candidate for coordinated multipoint set determination based on a throughput for the user equipment and at least one of: an absolute location of the user equipment, and a location of the user equipment relative to the serving base station; identifying, via the hardware processor, for the selected user equipment, a set of neighboring base station candidates based on distances between the selected user equipment and neighboring base stations; identifying, via the hardware processor, an intermediate coordinated multipoint set of neighboring base stations for the selected user equipment based on one or more wireless communication parameters; choosing, via the hardware processor, whether to replace the default coordinated multipoint set of neighboring base stations for the selected user equipment with the intermediate coordinated multipoint set of neighboring base stations; and setting, via the hardware processor, the chosen coordinated multipoint set of neighboring base stations as a final coordinated multipoint set for the selected user equipment for coordinated multipoint communication.

In another embodiment, a coordinated multipoint set determination method is provided. The method comprises: obtaining serving base station information for a serving base station, and neighboring base station information for a plurality of neighboring base stations for the serving base station; determining an initial coordinated multipoint region based on the neighboring base station information and the serving base station information; identifying a default coordinated multipoint set of neighboring base stations for each user equipment associated with the serving base station; selecting one of the user equipment associated with the serving base station as a candidate for coordinated multipoint set determination based on a throughput for the user equipment and at least one of: an absolute location of the user equipment, and a location of the user equipment relative to the serving base station; identifying for the selected user equipment, a set of neighboring base station candidates based on distances between the selected user equipment and neighboring base stations; identifying an intermediate coordinated multipoint set of neighboring base stations for the selected user equipment based on one or more wireless communication parameters; choosing whether to replace the default coordinated multipoint set of neighboring base stations for the selected user equipment with the intermediate coordinated multipoint set of neighboring base stations; and setting the chosen coordinated multipoint set of neighboring base stations as a final coordinated multipoint set for the selected user equipment for coordinated multipoint communication.

In yet another embodiment, a non-transitory computer readable storage medium is provided. The storage medium stores a program that, when executed by a computer, cause the computer to perform a coordinated multipoint set determination method. The method comprises: obtaining serving base station information for a serving base station, and neighboring base station information for a plurality of neighboring base stations for the serving base station; determining an initial coordinated multipoint region based on the neighboring base station information and the serving base station information; identifying a default coordinated multipoint set of neighboring base stations for each user equipment associated with the serving base station; selecting one of the user equipment associated with the serving base station as a candidate for coordinated multipoint set determination based on a throughput for the user equipment and at least one of: an absolute location of the user equipment, and a location of the user equipment relative to the serving base station; identifying for the selected user equipment, a set of neighboring base station candidates based on distances between the selected user equipment and neighboring base stations; identifying an intermediate coordinated multipoint set of neighboring base stations for the selected user equipment based on one or more wireless communication parameters; choosing whether to replace the default coordinated multipoint set of neighboring base stations for the selected user equipment with the intermediate coordinated multipoint set of neighboring base stations; and setting the chosen coordinated multipoint set of neighboring base stations as a final coordinated multipoint set for the selected user equipment for coordinated multipoint communication.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles.

FIG. 1 illustrates an LTE wireless network in which embodiments of the present disclosure can be used.

FIG. 2 is a functional block diagram of an exemplary eNodeB according to some embodiments of the present disclosure.

FIG. 3 is a functional block diagram illustrating interactions between some of the components of an exemplary eNodeB according to some embodiments of the present disclosure.

FIGs. 4A-E are flow diagrams illustrating an exemplary method for determining a CoMP set in accordance with some embodiments of the present disclosure.

FIG. 5 is a block diagram of an exemplary computer system for implementing embodiments consistent with the present disclosure.

## DETAILED DESCRIPTION

Exemplary embodiments are described with reference to the accompanying drawings. In the figures, the leftmost digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Illustrative embodiments of the present disclosure are listed below. In one embodiment, a coordinated multipoint set determination system is provided. The system comprises a hardware processor; and a memory storing instructions executable by the hardware processor for: obtaining, via the hardware processor, serving base station information for a serving base station, and neighboring base station information for a plurality of neighboring base stations for the serving base station; determining, via the hardware processor, an initial coordinated multipoint region based on the neighboring base station information and the serving base station information; identifying, via the hardware processor, a default coordinated multipoint set of neighboring base stations for each user equipment associated with the serving base station; selecting, via the hardware processor, one of the user equipment associated with the serving base station as a candidate for coordinated multipoint set determination based on a throughput for the user equipment and at least one of: an absolute location of the user equipment, and a location of the user equipment relative to the serving base station; identifying, via the hardware processor, for the selected user equipment, a set of neighboring base station candidates based on distances between the selected user equipment and neighboring base stations; identifying, via the hardware processor, an intermediate coordinated multipoint set of neighboring base stations for the selected user equipment based on one or more wireless communication parameters; choosing, via the hardware processor, whether to replace the default coordinated multipoint set of neighboring base stations for the selected user equipment with the intermediate coordinated multipoint set of neighboring base stations; and setting, via the hardware processor, the chosen coordinated multipoint set of neighboring base stations as a final coordinated multipoint set for the selected user equipment for coordinated multipoint communication.

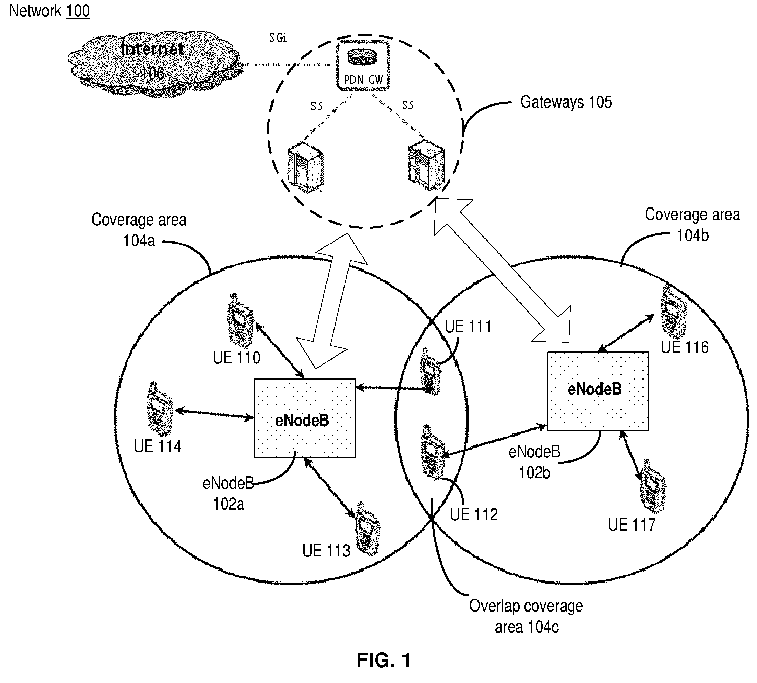

**FIG. 1** illustrates an LTE wireless network 100, in which embodiments of the present disclosure can be used. As shown in **FIG. 1,** LTE wireless network 100 includes an eNodeB 102a associated with a coverage area 104a, and an eNodeB 102b associated with a coverage area 104b. LTE wireless network 100 also includes gateways 105. eNodeB 102a and 102b can provide functionalities such as radio resource management (RRM), header compression and encryption of user data stream, packet scheduling and transmission, broadcast information transfer, physical layer processing, etc. Gateways 105 can include a combination of gateways including, for example, a PDN gateway. A PDN gateway can provide functionalities such as packet filtering, mobile IP, policy enforcement, etc. Gateways 105 can also include mobility management entity (MME), which can provide functionalities including, for example, non access stratum, ciphering and integrity protection, inter core network signalling, SAE bearer control, handover, etc. Gateways 105 can also provide other functionalities such as lawful interception, packet routeing and forwarding, transport level packet marking in the uplink and the downlink, accounting on user, etc. In some cases, gateways 105 can interact with other entities that provide policy and charging rules function, policy enforcement decisions, and subscriber information storage.

Both eNodeB 102a and 102b can relay data between Internet 106 and an UE (e.g., any one of UE110-116) via gateways 105, if the UE is within a coverage area associated with the eNodeB. For example, UEs 110, 113, and 114 are located within coverage area 104a associated with eNodeB 102a, therefore these UEs can use eNodeB 102a to transmit and receive data from Internet 106. Moreover, UEs 116 and 117 are located within coverage area 104b, and can use eNodeB 102b to transmit and receive data from Internet 106.

On the other hand, as shown in **FIG. 1,** UEs 111 and 112 are located in an intersecting coverage area 104c between coverage areas 104a and 104b. Intersecting coverage area 104c is also close to an edge of coverage area 104a and an edge of coverage area 104b. As a result, UEs111 and 112 can experience poor data throughput. The throughput at the intersecting area can be improved if, for example, both eNodeBs 102a and 102b are included in a CoMP set associated with UEs 111 and 112, such that they can be coordinated to serve UEs 111 and 112. The determination of including eNodeBs 102a and 102b can be based on, for example, a determination that UEs 111 and 112 are located in an intersecting coverage area (e.g., intersecting coverage area 104c), neighboring base stations associated with a coverage area that is part of the intersecting coverage area, and various wireless communication parameters. The determination can also be dynamically and periodically updated based on, for example, a location of UE 111 and UE 112. For example, if UE 111 is determined to be moving away from eNodeB 102b, the CoMP set associated with UE 111 can be updated to remove eNodeB 102b from the set. On the other hand, if UE 111 is determined to be moving towards eNodeB 102b, the CoMP set associated with UE 111 can be updated to include eNodeB 102b in the set, based on an indication that eNodeB 102b is a candidate neighboring base station for handover.

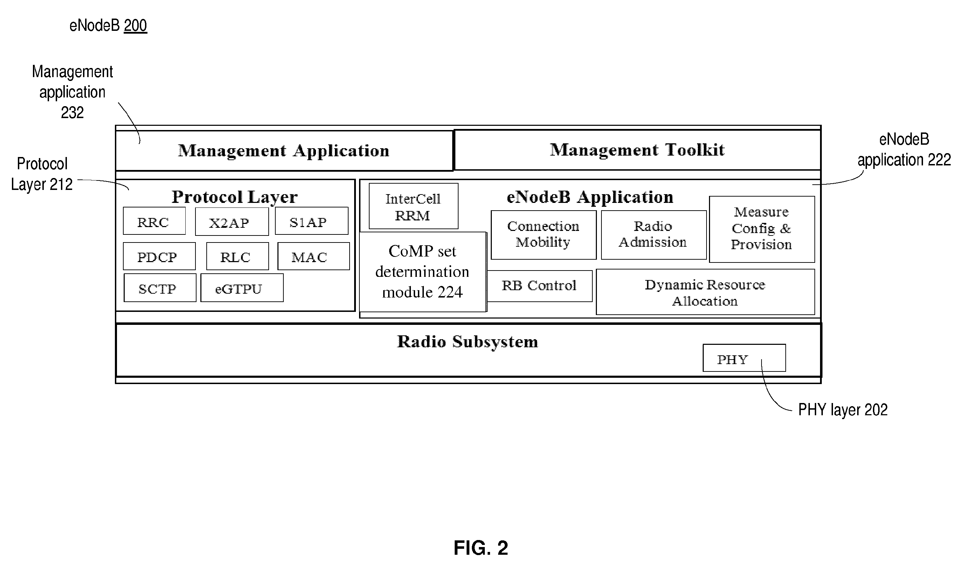

**FIG. 2** is a functional block diagram of an exemplary eNodeB 200 according to some embodiments of the present disclosure. In some embodiments, eNodeB 200 can be used to implement at least some of the functionalities of eNodeB 102a and 102b of **FIG. 1.** As shown in **FIG. 2,** eNodeB 200 includes a PHY layer 202, a Protocol layer 212, eNodeB application 222, and management application 232.

In some embodiments, PHY layer 202 can be used for communication with UEs, and may provide functionalities including, for example, OFDM modulation and coding, resource partitioning, multiplexing, etc. In some embodiments, PHY layer 202 includes components defined within *3GPP Technical Specification Group Radio Access Network; Evolved Universal Terrestrial Radio Access (E-UTRA); Physical channels and modulation (Release 12)*(http://www.3gpp.org/ftp/Specs/archive/36_series/36.211 / 36211-c00.zip), the content of which is incorporated herein by reference.

In some embodiments, protocol layer 212 can be used to handle control and user plane protocols (e.g., RRC, X2AP, PDCP, RLC, MAC, eGTP-U messages, etc.), and may provide functionalities including, for example, header compression and encryption of user level IP packets, error recovery and flow control, hybrid automatic repeat request (HARQ), scheduling, etc.

RRC can provide functionalities including, for example, connection establishment and connection release, system Information broadcast, bearer establishment, reconfiguration, etc. RRC can also handle RRC mobility procedures, Paging notification and release and outer loop power control. RRM can work as a subset of RRC and can manage the RRC resources. RRM can also provide measurement configuration for measurement reports, and can process measurement reports received via RRC.

X2AP can be used to handle UE mobility. X2AP can provide functionalities including, for example, mobility management during handover, load management for load balancing, resetting X2 in the event of failure of system, setting up X2 for information transfer among base stations, eNodeB configuration update for updating the changes in the configuration.

PDCP can provide functionalities to user plane and control plane in wireless communication. These functionalities can include, for example, header compression and de-compression, in-sequence delivery of upper layers SDUs, duplicate detection of lower layer SDUs, PDCP SDUs retransmission at handover, ciphering and integrity protection, and control plane data transfer.

In some embodiments, protocol layer 212 can include components and functionalities defined within *3GPP Technical Specification Group Services and System Aspects; General Packet Radio Service (GPRS) enhancements for Evolved Universal Terrestrial Radio Access Network (E-UTRAN) access (Release 8)* (http://www.3gpp.org/ftp/Specs/archive/23_series/23.401/23401-8g0.zip), *3GPP Technical Specification Group Radio Access Network; Evolved Universal Terrestrial Ration Access (E-UTRA); Radio Resource Control (RRC); Protocol Specification (Release 8)* (http://www.3gpp.org/ftp/Specs/archive/36series/36.331/36331-8h0.zip), and *3GPP Technical Specification Group Radio Access Network; Evolved Universal Terrestrial Radio Access (E-UTRA); Medium Access Control (MAC) protocol specification (Release 8)* (http://www.3gpp.org/ftp/Specs/archive/36_series/36.331 / 36331-8h0.zip). The contents of the above-referenced documents are incorporated herein by reference.

eNodeB application 222 can provide functionalities including, for example, acceptance of an incoming call, final disposition of the call, mobility management, downlink scheduling, NBS function, Physical Cell ID (PCI) Configuration, minimization of drive test (MDT), etc. Management application 232 can provide configuration data for eNodeB application 222.

As shown in **FIG. 2,** eNodeB application 222 further includes a CoMP set determination module 224. In some embodiments, CoMP set determination module 224 can obtain configuration information related to CoMP determination from management application 232. CoMP set determination module 224 can also store at least part of the configuration information received from management application 232. CoMP set determination module 224 can also determine a CoMP set to be used for providing service to a UE located at cell edge, and update the configuration information accordingly. The updated configuration can then be provided to configure other components of eNodeB 200.

In some embodiments, the configuration information can include at least some of the following parameters:

Default neighboring base station (NBS) List ($NBS_{Default}$) can be related to a default list of NBS during system Initialization. This list can be used to find the most suitable NBS during handover. This information can be used by the system to determine and update the CoMP set.

CoMP set validation timer ($CoMP\text{-}Val_{timer}$) can be related to a duration for a validation process of a newly-determined CoMP set. This parameter can be used by the system to determine and update the CoMP set.

Threshold signal strength ($Signal_{th}$) can be related to a threshold value of reference signal received power (RSRP). This threshold can be used for determining whether a measurement report from in neighboring base station (NBS) is to be taken into consideration for CoMP set determination. The value can be dynamically changed based on the UE measurement report.

Threshold physical resource retransmission for hybrid automatic repeat request (HARQ) ($PHharq_{th}$) can be related to a threshold value of HARQ factor for determining whether a NBS is to be considered as a candidate for the CoMP set. If a value of HARQ is below $PHharq_{th}$, the system may determine not to include that NBS as a CoMP set candidate during the CoMP set validation stage (to be discussed below).

Threshold Channel Quality ($CQ_{th}$) can be related to a threshold value of channel quality factor for determining whether a NBS is to be considered as a candidate for the CoMP set. If the CQ is below $CQ_{th}$, the system may determine not to include that NBS as a CoMP set candidate during the CoMP set validation stage.

Threshold Physical Resource Retransmission for RACH ($PHrach_{th}$) can be related to a threshold value of RACH retransmission factor for determining whether a NBS is to be considered as a candidate for the CoMP set. If the physical RACH retransmission factor is above $PHrach_{th}$, the system may determine not to include that NBS as a CoMP set candidate during the CoMP set validation stage.

Threshold Radio Link Failure Factor ($RLF_{ThFact}$) can be related to a threshold value for selecting a NBS for handover. If a radio link failure factor (RLF) is above $RLF_{ThFact}$, The system may determine not to select a cell and not to include a NBS associated with the cell in the CoMP set.

Neighboring Base Station Cell Radius ($Neigh_{Cell\_Radius}$) can be related to a parameter used for determining a radius of coverage area associated with a base station. Intersecting coverage area can be determined based on $Neigh_{Cell\_Radius.}$

Location of Neighboring Base Station ($Neigh_{Loc}$) can be related to a geo location of a neighboring base station (NBS). This parameter can be used for determining intersecting coverage area. This parameter can be used in system initialization.

Threshold Cell Distance ($CellDiSt_{th}$) can be is related to a threshold distance from a boundary of cell coverage area. If a distance between a UE and the boundary is below $CellDist_{th}$, the system can determine that the UE is at a cell edge of the coverage area. This parameter can be used in system initialization and in determining whether the UE is a candidate to be associated with a CoMP set and can be served by a NBS listed in the CoMP set.

Threshold throughput ($TP_{th}$) can be is related to a threshold data throughput experienced by the UE. If a data throughput experienced by the UE is below $TP_{th}$, the system can determine that the UE is a candidate to be associated with a CoMP set and can be served by a NBS listed in the CoMP set.

Number of Sectors ($SBS_{Cell\_Sec}$) can be related to a number of sectors within a cell managed by a serving base station (SBS). This parameter can be used to determine a coverage area of a neighboring base station (NBS) within each sector of the cell managed by the SBS. This parameter can be used in system initialization.

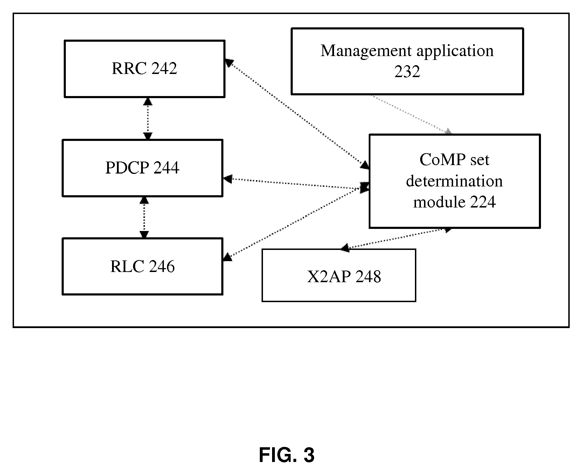

Reference is now made to **FIG. 3**, which a functional block diagram illustrating exemplary interactions between CoMP set determination module 224, management application 232, and at least some of other components at eNodeB 200. As shown in **FIG. 3,** CoMP set determination module 224 can interact with radio resource control (RRC) 242, packet data convergence protocol (PDCP) 244, radio link control (RLC) 246, and X2 application procol (X2AP) 248 modules, of protocol layer 212, in determining the CoMP set. Moreover, management application 232 can provide configuration data for eNodeB application 222 that enables configuration of these modules. The configuration data can include at least some of the following parameters:

Configuration data for CoMP set determination module 224: the configuration data can include, for example: Physical Cell ID (PCI), Neighboring List, E-UTRAN (Evolved Universal Terrestrial Radio Access Network) Cell Global Identifier (ECGI), Internet protocol (IP), Handover, X2 set up, etc.

$RRC_{Config}$: RRC configuration data that can be used to configure RRC module of the protocol layer. This configuration data can include, for example, AntennaInfo, CQI-ReportConfig, LogicalChannelConfig, MAC-MainConfig, PDCP-Config, etc.

$RRM_{Config}$: RRM Configuration data that can be used to configure RRM module of the protocol layer. The configuration data can include Measurement Configuration.

$PDCP_{Config}$: PDCP configuration data that can be used to configure PDCP module.

$X2AP_{Config}$: X2AP configuration data that can be used to configure X2AP module.

$BS_{Config}$ : Base station configuration data, such as transmission (TX) power, base station cell ID, base station location, etc.

At least some of the aforementioned parameters can be used to configure a serving base station (SBS) for receiving UE measurement report of neighboring base station (NBS) in each sector of the SBS.

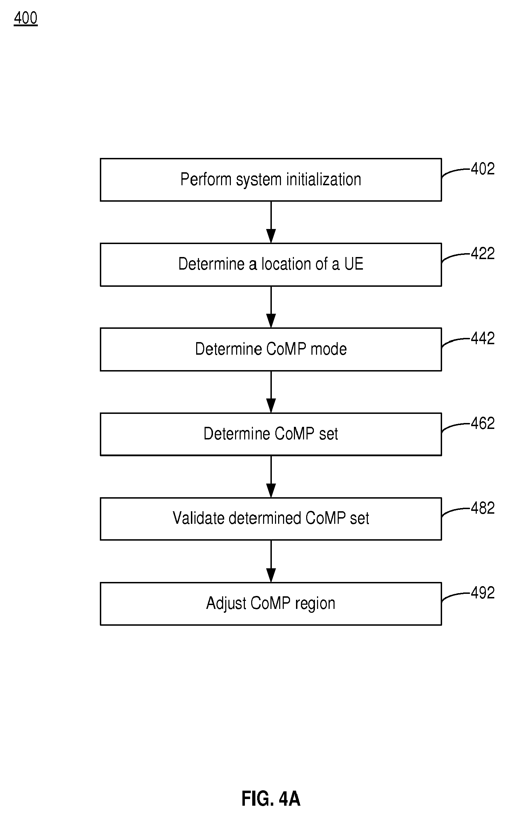

Reference is now made to **FIGs. 4A-E,** which is a flowchart illustrating an exemplary method 400 for determining a CoMP set. In some embodiments, method 400 can be performed by a system including, for example, CoMP set determination module 224 of **FIG. 2.**

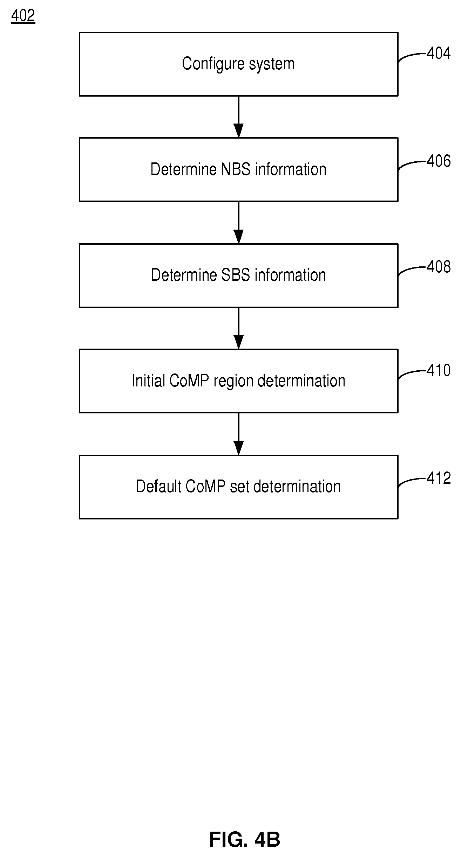

In step 402, the system can perform system initialization to obtain initial configuration data for CoMP set determination. Reference is now made to **FIG. 4B,** which illustrates the sub-steps of step 402.

In step 404, the system can receive at least some of the aforementioned configuration information from management application 232. The configuration information can include information for configuring a SBS for receiving UE measurement report of NBS in each sector of the SBS. The configuration information can also include parameters such as $NBS_{Default}$ (a list of default NBS for handover).

In step 406, the system can determine configuration information related to neighbour base station (NBS). In other words, the system can determine neighbouring base station information for a plurality of neighbouring base stations for the serving base station. The neighbouring base station information includes properties of each neighbouring base station describing how suitable each neighbouring base station is for handover from the serving base. The information can include: a list of NBS from management application 232 (which may or may not be identical to $NBS_{Default}$), a radius of a cell coverage area associated with each NBS ($Neigh_{Cell\_Radius}$) on the list, location ($Neigh_{Loc}$) of each NBS on the list, PCI of cells associated with the NBS, transmission signal strength of each NBS on the list, etc.

In step 408, the system can determine configuration information related to serving base station (SBS). In other words, the system can determine serving base station information for a serving base station. The information can be used to perform a sectorization of a cell associated with the SBS. The information can include: a number of sector $SBS_{Cell\_Sec}$ for every SBS, a radius of a cell coverage area ($SBS_{Cell\_Radius}$) associated with the SBS, transmission signal strength at the SBS, etc. The whole coverage area can then be divided into sectors based on the information using standard method (e.g., as specified in 3GPP specification 36331.a20).

In step 410, the system can determine a CoMP region. In some embodiment, CoMP region can represent an intersecting coverage area between neighboring cells (e.g., intersecting coverage area 104c of **FIG. 1**), such that UEs located in the CoMP region can be considered as candidates to be associated with a CoMP set and can be served by an NBS to maintain data throughput and quality of service.

The determination of a CoMP region can be performed based on a cell coverage radius of each NBS (Neigh$_{Cell\_Radius}$) on the list and a cell coverage radius of the SBS (SBS$_{Cell\_Radius}$). For example, for each sector of the SBS (SBS$_{Cell\_Sec}$) (determined in Step 408) and for each of the NBS on the list, the system can determine an intersecting coverage area, COMP$_{region}$, as follows:

$$CoMP_{region} = |\, SBS_{Cell\_Radius} - Neigh_{Cell\_Radius}\, | \; x \; Area\ Factor$$

In step 412, the system can determine a default CoMP set. For example, the system can include each of the NBS listed in the list of NBS (e.g., NBS$_{Default}$) in the default CoMP set. The system can also determine a distance between each of the NBS and each of the UEs located in a cell coverage area associated with the SBS.

Referring back to **FIG. 4A,** after obtaining initial configuration data for CoMP set determination in step 402, the system can proceed to step 404 to determine a location associated with each of the UEs located in a cell coverage area associated with the SBS. The determination of the location enables the system to determine whether a particular UE is a candidate to be associated with a CoMP set and can be served by an NBS to maintain data throughput and quality of service, and to determine whether a particular NBS is a candidate to be included in the CoMP set.

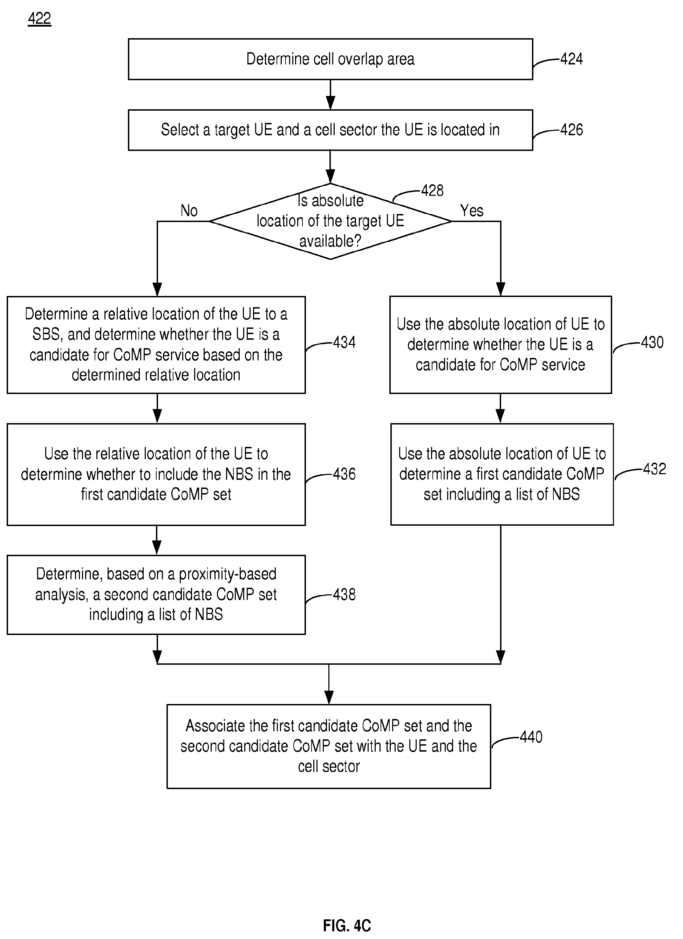

Reference is now made to **FIG. 4C,** which illustrates the sub-steps of step 422. In step 424, the system can determine an intersecting coverage area between each of the NBS listed and each of the cell sectors of the SBS. Based on the determined intersecting coverage area, the system can then determine cell edge area, and a particular UE located in the determined cell edge area can then be considered as a candidate to be associated with a CoMP set. In some embodiments, the determination of intersecting coverage area can be based on the cell coverage radius of each NBS (Neigh$_{Cell\_Radius}$) on the list and the cell coverage radius of the SBS (SBS$_{Cell\_Radius}$).

In step 426, the system can select a UE (e.g., a target UE) and the cell sector the UE is located in, and then performs the following steps for that particular UE and that particular cell sector.

In step 428, the system can determine whether absolute location information (e.g., from GPS) of the UE is available. If the absolute location information is available, the system can proceed to step 430. If the absolute location information is not available, the system can proceed to step 434.

In step 430, after determining that the absolute location information of the target UE is available, in step 428, the system can use the absolute location information of the target UE to determine whether the UE is a candidate for CoMP service (e.g., to be associated with a CoMP set). The determination can include the following steps 430a and 430b:

In step 430a, the system can determine whether the target UE is within a cell associated with the SBS, based on a relationship between a distance of the UE from the SBS, and the cell coverage radius of the SBS (SBS$_{Cell\_Radius}$). For example, if the relationship indicates that a distance between a UE and the boundary is below CellDist$_{th}$, which indicates that the UE is within the cell, the system can determine that the target UE is a potential candidate for CoMP service.

In step 430b, after determining that the target UE is a potential candidate, the system can then determine whether a data throughput at that UE is below a threshold throughput (TP$_{th}$). If the data throughput is below TP$_{th}$, the system can determine that the target UE is candidate for CoMP service.

In step 432, after determining that the absolute location information of the UE is available, in step 428, the system can also use the absolute location information of the UE to determine whether a NBS (e.g., from the list of NBS, such as NBS$_{Default}$) is a candidate to be included in a first candidate CoMP set (CoMP$_{set}$). In some embodiments, the determination can include the following steps 432a and 432b:

In step 432a, the system can determine to receive a UE measurement report from a second UE located in a cell associated with the NBS through X2 interface messaging. The measurement report can include the GPS location of the second UE.

In step 432b, the system can determine a relationship between the absolute location of the target UE in the cell associated with the SBS, and an absolute location of the second UE in the cell associated with the NBS. If the relationship indicates that the two UEs are separated by a distance that is below or equal to a pre-determined threshold distance Dist$_{th}$, the system can then determine to include the NBS as a potential candidate for the first candidate CoMP set.

Referring back to step 428, if the absolute location information is not available, the system can proceed to steps 434-438 to estimate a relative location between a UE and a base station, and to perform the candidate UE and candidate NSB determination for CoMP set based on a relative location of the UEs. In some embodiments, the relative location of the UE can be determined based on, for example, signal strength received by the UE as reported in a UE measurement report. Based on the signal strength, the system can then determine a propagation loss of the signal, and can estimate a distance between the UE and the base station based on the propagation loss. In some embodiments, the system can also perform proximity analysis based on the UE measurement reports, and determine candidate NSB for a CoMP set based on the proximity analysis.

In step 434, the system can determine whether the target UE is a candidate to receive CoMP service based on an estimated relative distance between the target UE and the SBS. In some embodiments, the determination can include the following steps 434a, 434b, and 434c:

In step 434a, the system can acquire a UE measurement report from the target UE and, based on the signal strength information included in the measurement report, estimate a relative distance between the UE and the SBS, as discussed above.

In step 434b, The system can determine a relationship between the relative distance determined in step 434a and the cell coverage radius of the SBS ($SBS_{Cell\_Radius}$). Based on the relationship, the system can determine whether the UE is within a cell associated with the SBS. For example, if the relationship indicates that a distance between a UE and the boundary is below $CellDist_{th}$, which indicates that the UE is within the cell, the system can determine that the UE is a potential candidate for CoMP service.

In step 434c, after determining that the target UE is a potential candidate, the system can then determine whether a data throughput at that UE is below a threshold throughput ($TP_{th}$). If the data throughput is below $TP_{th}$, the system can determine that the UE is candidate for CoMP service.

In step 436, after determining that the absolute location information of the UE is not available, in step 428, the system can also estimate a relative location of a second UE located in a cell associated with a NBS (e.g., from the list of NBS, such as $NBS_{Default}$), and then determine whether the NBS is a candidate to be included in the first candidate CoMP set ($CoMP_{set}$). The determination can include the following steps 436a and 436b:

In step 436a, the system can determine to receive a UE measurement report from a second UE located in a cell associated with the NBS.

In step 436b, the system can determine a relative location of the second UE with respect to the NBS based on the signal strength information included in the UE measurement report from the second UE. The system can then determine a relationship between the relative location of the target UE in the cell associated with the SBS, and the relative location of the second UE in the cell associated with the NBS. If the relationship indicates that the two UEs are separated by a distance that is below or equal to a pre-determined threshold distance $Dist_{th}$, the system can then determine to include the NBS as a potential candidate for the first candidate CoMP set.

In step 438, the system can also perform a proximity-based analysis to determine a second candidate CoMP set ($CoMP_{set\_prox}$). For example, a third UE can be determined to be at proximity to the target UE (based on, for example, D2D communication method). Based on this determination, a proximate location of the target UE can be determined, and a proximate location of a second UE in a cell associated with a NBS can also be determined. Based on the proximate locations of the target UE and the second UE, the system can then determine whether the NBS is to be included in the second candidate CoMP set, and whether the target UE is to be associated with the second candidate CoMP set, using similar methods as steps 434 and 436.

After determining the first and second candidate CoMP sets, the system can then proceed to step 440 to associate the CoMP sets with a particular cell sector, a particular UE (e.g., the target UE), and a particular NBS. The system can then repeat step 422 for other cell sectors, other UEs located in the cell sectors, and other NBS in the list.

Referring back to **FIG. 4A,** after the system completes step 422, the system can then proceed to step 442 to determine a CoMP mode. The CoMP mode can be, for example, Co-ordinated scheduling or Joint Transmission.

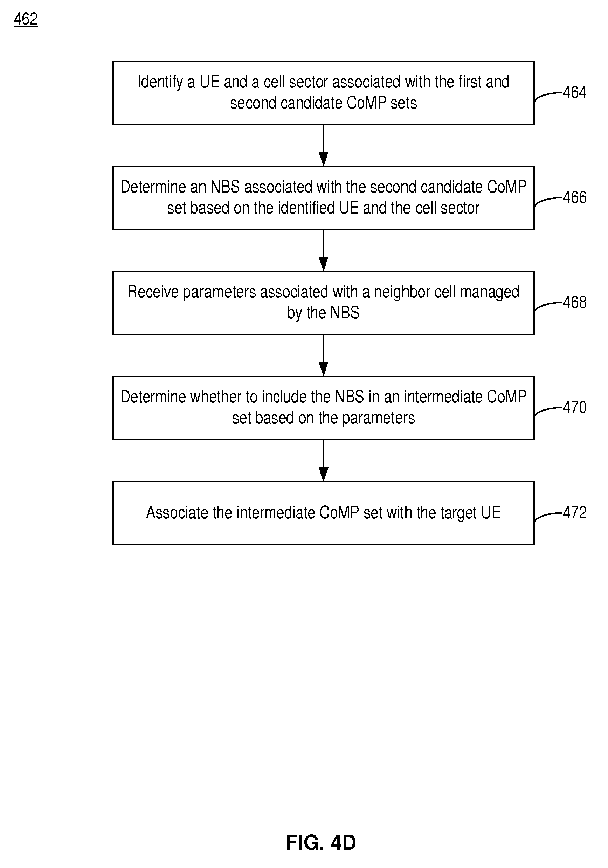

After determining a CoMP mode in step 442, the system can then proceed to step 462 to determine an intermediate CoMP set ($CoMP_{Intmdt}$) based on the first and second candidate CoMP sets determined in step 422. Referring to FIG. 4D, the system can perform at least some of the following steps 464-472 in performing step 462:

In step 464, the system can identify a UE (e.g., a target UE) and a cell sector that is associated with both the first and second candidate CoMP set.

In step 466, the system can identify a NBS that is associated with the second candidate CoMP set based on the identified UE and the cell sector from step 464. For example, in a case where different second candidate CoMP sets are associated with different UE, cell sectors, and NBS, the system can identify a NBS that is associated with a second candidate CoMP set that is also associated with the identified UE and the cell sector.

In step 468, after identifying the NBS in step 466, the system can receive one more wireless communication parameters, as well as measurement reports, associated with a neighbour cell that is associated with the identified NBS. The measurement reports and the parameters can be received via an X2 interface. The parameters can be used for determining whether that NBS is to be included in the intermediate CoMP set. These parameters can include, for example, physical resource retransmission for HARQ (PHharq), channel quality information (CQI), RACH information, etc.

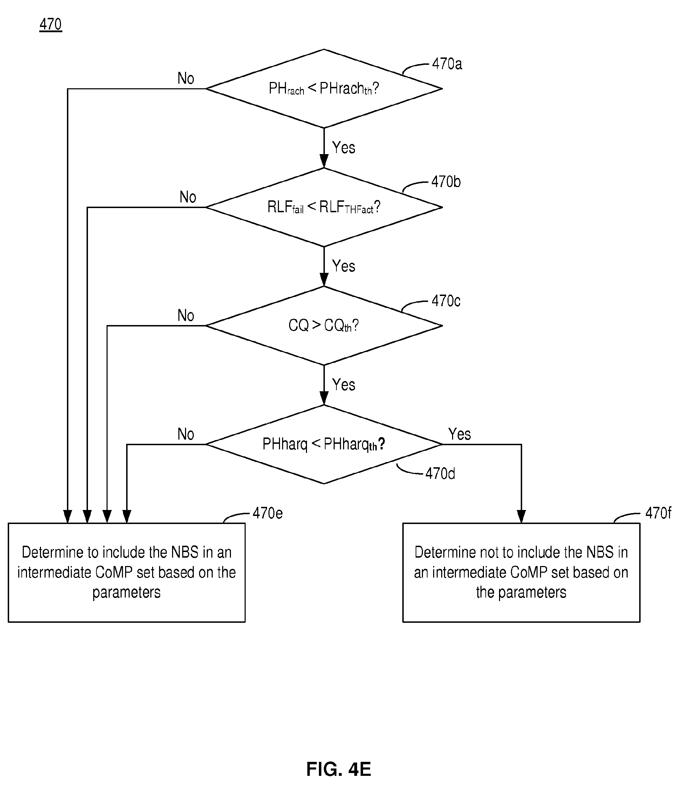

In step 470, the system can compare the received parameters against the corresponding threshold values, which the system obtained during system initialization (step 402 of **FIG. 4A**). Referring to **FIG. 4E,** the system can perform at least some of the following steps 470a-d in performing step 470:

In step 470a, the system can determine whether physical resource retransmission for RACH $Phy_{rach}$ ($PH_{rach}$) of the neighboring cell is below $PHrach_{th.}$ If $PH_{rach}$ is determined to be below $PHrach_{th}$, the system can proceed to step 470b. If $PH_{rach}$ is determined to be not below $PHrach_{th}$, the system can proceed to step 470e and determine not include the NBS in the intermediate CoMP set.

In step 470b, the system can determine whether radio link failure ($RLF_{fail}$) of the neighboring cell is below $RLF_{ThFact}$. If $RLF_{fail}$ is determined to be below $RLF_{ThFact}$, the system can proceed to step 470c. If $RLF_{fail}$ is determined to be not below $RLF_{ThFact}$, the system can proceed to step 470e and determine not include the NBS in the intermediate CoMP set.

In step 470c, the system can determine whether channel quality (CQ) of the neighboring cell exceeds $CQ_{th}$. If CQ is determined to exceed $CQ_{th}$, the system can proceed to step 470d. If CQ is determined to not exceed $CQ_{th}$, the system can proceed to step 470e and determine not include the NBS in the intermediate CoMP set.

In step 470d, the system can determine whether physical resource retransmission for HARQ (PHharq) of the neighboring cell exceeds $PHharq_{th.}$ If PHharq is determined to be below $PHharq_{th}$, the system can proceed to step 470df. If PHharq is determined to be not below $PHharq_{th}$, the system can proceed to step 470e and determine not include the NBS in the intermediate CoMP set.

Referring back to **FIG. 4D,** after the system completes the performance of step 470 and determines the intermediate CoMP set, the system can then proceed to perform step 472 to associate the intermediate CoMP with the target UE.

Referring back to **FIG. 4A,** after the system completes the performance of step 462 and determines a CoMP set (e.g., the intermediate CoMP set), the system can then proceed to perform step 482 to validate the determined CoMP set.

In some embodiments, the validation of the determined CoMP set in step 482 can be made based on at least some of these parameters: the available resource at a particular NBS included in the determined CoMP set, radio link failure of the cell associated with that NBS, duplicate cell ID, etc. The system can calculate a yield throughput ($Thy_{ld}$) based on these parameters for a particular NBS, and a total throughput ($Thy_{tot}$) for all of the NBS listed in the determined CoMP set. If the total throughput equals a desired throughput at a particular UE ($Th_{desr}$), the system can determine that the particular NBS should be retained in the determined CoMP set. On the other hand, if the total throughput does not equal to the desired throughput, the system can determine that the default CoMP set (determined in step 412) should be associated with that particular target UE. After the determined CoMP set is validated and updated to form a final CoMP set, the system can transmit the final CoMP set to management application 232 to configure the base station.

In some embodiments, the validation is performed periodically, or triggered based on the CoMP set validation timer information as discussed above. As a result, the CoMP set can be updated to reflect the location changes of the UEs.

After the system completes the performance of step 482, the system can then proceed to perform step 492 to adjust the CoMP region determined in step 410. As discussed above, the CoMP region can represent an intersecting coverage area between neighboring cells (e.g., intersecting coverage area 104c of **FIG. 1**). In step 492, the system can adjust the CoMP region based on a number of UEs being associated with the same final CoMP set from step 482. By associating the CoMP region with CoMP set, when a new UE enters a pre-defined CoMP region, the new UE can then be associated with the CoMP set associated with that pre-defined CoMP region. As a result, the determination of CoMP set for the new UE can be done more efficiently.

In some embodiments, the system can first determine a list of UEs associated with the same final CoMP set. The system can then record location information for each of the list of the UEs. The location information can be one of: The adjustment of the CoMP region can be based on an absolute location, a relative location, and a proximate location, as determined in steps 430-438 of **FIG. 4C**). The CoMP region can then be updated to include an area that reflects the location information of the UEs.

Computer System

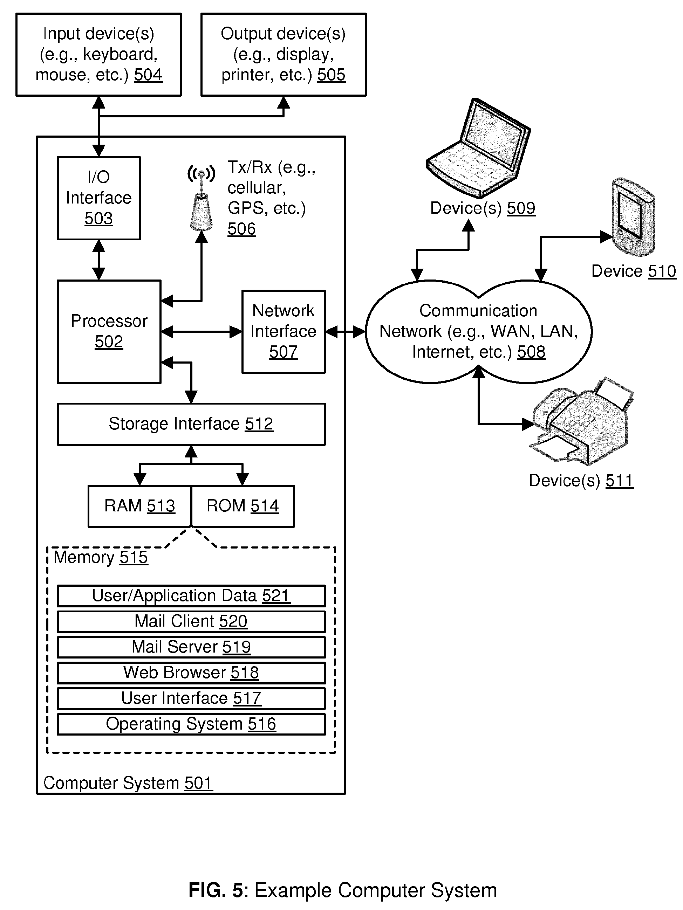

FIG. 5 is a block diagram of an exemplary computer system for implementing embodiments consistent with the present disclosure. Variations of computer system 501 may be used for implementing the devices and systems disclosed herein. Computer system 501 may comprise a central processing unit ("CPU" or "processor") 502. Processor 502 may comprise at least one data processor for executing program components for executing user- or system-generated requests. A user may include a person, a person using a device such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 502 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 502 may be disposed in communication with one or more input/output (I/O) devices via I/O interface 503. The I/O interface 503 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.11 a/b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 503, the computer system 501 may communicate with one or more I/O devices. For example, the input device 504 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 505 may be a printer, fax machine, video display (e.g., cathode ray tube (CRT), liquid crystal display (LCD), light-emitting diode (LED), plasma, or the like), audio speaker, etc. In some embodiments, a transceiver 506 may be disposed in connection with the processor 502. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 502 may be disposed in communication with a communication network 508 via a network interface 507. The network interface 507 may communicate with the communication network 508. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 508 may include, without limitation, a direct interconnection, local area network (LAN), wide area network (WAN), wireless network (e.g., using Wireless Application Protocol), the Internet, etc. Using the network interface 507 and the communication network 508, the computer system 501 may communicate with devices 510, 511, and 512. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 501 may itself embody one or more of these devices.

In some embodiments, the processor 502 may be disposed in communication with one or more memory devices (e.g., RAM 513, ROM 514, etc.) via a storage interface 512. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc. Variations of memory devices may be used for implementing, for example, the databases disclosed herein.

The memory devices may store a collection of program or database components, including, without limitation, an operating system 516, user interface application 517, web browser 518, mail server 519, mail client 520, user/application data 521 (e.g., any data variables or data records discussed in this disclosure), etc. The operating system 516 may facilitate resource management and operation of the computer system 501. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 517 may facilitate display, execution, interaction, manipulation, or operation of program components through textual or graphical facilities. For example, user interfaces may provide computer interaction interface elements on a display system operatively connected to the computer system 501, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 501 may implement a web browser 518 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 501 may implement a mail server 519 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 501 may implement a mail client 520 stored program component. The mail client may be a mail viewing application, such as Apple Mail, Microsoft Entourage, Microsoft Outlook, Mozilla Thunderbird, etc.

In some embodiments, computer system 501 may store user/application data 521, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of any computer or database component may be combined, consolidated, or distributed in any working combination.

The specification has described methods and systems for advanced Coordination Multi Point (CoMP) set determination in a wireless network. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A coordinated multipoint set determination system, comprising:

   a hardware processor; and
   a memory storing instructions executable by the hardware processor for:

   obtaining serving base station information for a serving base station, and neighboring base station information for a plurality of neighboring base stations for the serving base station;
   determining an initial coordinated multipoint region based on the neighboring base station information and the serving base station information;

identifying a default coordinated multipoint set of neighboring base stations for each user equipment associated with the serving base station;

selecting one of the user equipment associated with the serving base station as a candidate for coordinated multipoint set determination based on a throughput for the user equipment and at least one of:

an absolute location of the user equipment, and

a location of the user equipment relative to the serving base station;

identifying for the selected user equipment, a set of neighboring base station candidates based on distances between the selected user equipment and neighboring base stations;

identifying an intermediate coordinated multipoint set of neighboring base stations for the selected user equipment based on one or more wireless communication parameters;

choosing whether to replace the default coordinated multipoint set of neighboring base stations for the selected user equipment with the intermediate coordinated multipoint set of neighboring base stations; and

setting the chosen coordinated multipoint set of neighboring base stations as a final coordinated multipoint set for the selected user equipment for coordinated multipoint communication.

2. The system of claim 1, the memory further storing instructions for:

adjusting, via the hardware processor, a coordinated multipoint region from the initial coordinated multipoint region based on a number of user equipment having a same final coordinated multipoint set.

3. The system of claim 1 or claim 2, the memory further storing instructions for:

determining, via the hardware processor, whether to utilize coordinated scheduling or joint transmission for coordinated multipoint communication for the selected user equipment; and

transmitting a data packet to the selected user equipment using the determined coordinated scheduling or joint transmission.

4. The system of any preceding claim, wherein determining the initial coordinated multipoint region comprises:

determining, via the hardware processor, an intersecting coverage area for the serving base station and the plurality of neighboring base stations for the serving base station.

5. The system of any preceding claim, wherein the location of the user equipment relative to the serving base station is determined using a received signal strength obtained from a measurement report.

6. The system of any preceding claim, wherein the intermediate coordinated multipoint set of neighboring base stations for the selected user equipment is identified using at least one or more of the following wireless communication parameters:

a physical resource retransmission rate for a random-access channel,

a radio link failure rate,

a channel quality, and

a physical resource retransmission rate for hybrid automatic repeat request.

7. The system of any preceding claim, wherein choosing whether to replace the default coordinated multipoint set of neighboring base stations for the selected user equipment with the intermediate coordinated multipoint set of neighboring base stations comprises:

comparing, via the hardware processor, a throughput for the selected user equipment using the intermediate coordinated multipoint set of neighboring base stations with a throughput for the selected user equipment using the default coordinated multipoint set of neighboring base stations.

8. A coordinated multipoint set determination method, comprising:

obtaining serving base station information for a serving base station, and neighboring base station information for a plurality of neighboring base stations for the serving base station;
determining an initial coordinated multipoint region based on the neighboring base station information and the serving base station information;
identifying a default coordinated multipoint set of neighboring base stations for each user equipment associated with the serving base station;
selecting one of the user equipment associated with the serving base station as a candidate for coordinated multipoint set determination based on a throughput for the user equipment and at least one of:

> an absolute location of the user equipment, and
> a location of the user equipment relative to the serving base station;
> identifying for the selected user equipment, a set of neighboring base station candidates based on distances between the selected user equipment and neighboring base stations;
> identifying an intermediate coordinated multipoint set of neighboring base stations for the selected user equipment based on one or more wireless communication parameters;
> choosing whether to replace the default coordinated multipoint set of neighboring base stations for the selected user equipment with the intermediate coordinated multipoint set of neighboring base stations; and setting the chosen coordinated multipoint set of neighboring base stations as a final coordinated multipoint set for the selected user equipment for coordinated multipoint communication.

9. The method of claim 8, further comprising:

> adjusting a coordinated multipoint region from the initial coordinated multipoint region based on a number of user equipment having a same final coordinated multipoint set.

10. The method of claim 8 or claim 9, further comprising:

> determining whether to utilize coordinated scheduling or joint transmission for coordinated multipoint communication for the selected user equipment; and
> transmitting a data packet to the selected user equipment using the determined coordinated scheduling or joint transmission.

11. The method of any one of claims 8 to 10, wherein determining the initial coordinated multipoint region comprises:

> determining an intersecting coverage area for the serving base station and the plurality of neighboring base stations for the serving base station.

12. The method of any one of claims 8 to 11, wherein the location of the user equipment relative to the serving base station is determined using a received signal strength obtained from a measurement report.

13. The method of any one of claims 8 to 12, wherein the intermediate coordinated multipoint set of neighboring base stations for the selected user equipment is identified using at least one or more of the following wireless communication parameters:

> a physical resource retransmission rate for a random-access channel,
> a radio link failure rate,
> a channel quality, and
> a physical resource retransmission rate for hybrid automatic repeat request.

14. The method of any one of claims 8 to 13, wherein choosing whether to replace the default coordinated multipoint set of neighboring base stations for the selected user equipment with the intermediate coordinated multipoint set of neighboring base stations comprises:

> comparing a throughput for the selected user equipment using the intermediate coordinated multipoint set of neighboring base stations with a throughput for the selected user equipment using the default coordinated multipoint set of neighboring base stations.

15. A non-transitory computer readable storage medium storing a program that, when executed by a computer, cause the computer to perform the method of any one of claims 8 to 14.

EP 3 176 955 A1

FIG. 1

eNodeB 200

Management
application
232

Protocol
Layer 212

eNodeB
application 222

| Management Application | Management Toolkit |
|---|---|

**Protocol Layer**

| RRC | X2AP | S1AP |
|---|---|---|
| PDCP | RLC | MAC |
| SCTP | eGTPU | |

**eNodeB Application**

InterCell RRM

CoMP set determination module 224

| Connection Mobility | Radio Admission | Measure Config & Provision |
|---|---|---|
| RB Control | Dynamic Resource Allocation | |

**Radio Subsystem**

PHY

PHY layer 202

**FIG. 2**

EP 3 176 955 A1

**FIG. 3**

400

```
┌─────────────────────────────────────┐
│     Perform system initialization    │──402
└─────────────────────────────────────┘
                    │
                    ▼
┌─────────────────────────────────────┐
│      Determine a location of a UE    │──422
└─────────────────────────────────────┘
                    │
                    ▼
┌─────────────────────────────────────┐
│         Determine CoMP mode          │──442
└─────────────────────────────────────┘
                    │
                    ▼
┌─────────────────────────────────────┐
│          Determine CoMP set          │──462
└─────────────────────────────────────┘
                    │
                    ▼
┌─────────────────────────────────────┐
│      Validate determined CoMP set    │──482
└─────────────────────────────────────┘
                    │
                    ▼
┌─────────────────────────────────────┐
│          Adjust CoMP region          │──492
└─────────────────────────────────────┘
```

FIG. 4A

<u>402</u>

```
┌─────────────────────────────────────┐
│         Configure system            │──404
└─────────────────────────────────────┘
                  │
                  ▼
┌─────────────────────────────────────┐
│      Determine NBS information       │──406
└─────────────────────────────────────┘
                  │
                  ▼
┌─────────────────────────────────────┐
│      Determine SBS information       │──408
└─────────────────────────────────────┘
                  │
                  ▼
┌─────────────────────────────────────┐
│   Initial CoMP region determination  │──410
└─────────────────────────────────────┘
                  │
                  ▼
┌─────────────────────────────────────┐
│    Default CoMP set determination    │──412
└─────────────────────────────────────┘
```

**FIG. 4B**

422

```
┌─────────────────────────────────────────────┐
│         Determine cell overlap area          │──424
└─────────────────────────────────────────────┘
                     │
                     ▼
┌─────────────────────────────────────────────┐
│ Select a target UE and a cell sector the UE  │──426
│              is located in                    │
└─────────────────────────────────────────────┘
                     │
                     ▼
```

No ◄─────  ◇ Is absolute location of the target UE available? ◇  ─────► Yes  ─428

```
┌───────────────────────────────┐          ┌───────────────────────────────┐
│ Determine a relative location  │          │ Use the absolute location of   │
│ of the UE to a SBS, and        │          │ UE to determine whether the    │
│ determine whether the UE is a  │──434     │ UE is a candidate for CoMP     │──430
│ candidate for CoMP service     │          │ service                        │
│ based on the determined        │          │                                │
│ relative location              │          │                                │
└───────────────────────────────┘          └───────────────────────────────┘
              │                                          │
              ▼                                          ▼
┌───────────────────────────────┐          ┌───────────────────────────────┐
│ Use the relative location of   │          │ Use the absolute location of   │
│ the UE to determine whether    │──436     │ UE to determine a first        │──432
│ to include the NBS in the      │          │ candidate CoMP set including   │
│ first candidate CoMP set       │          │ a list of NBS                  │
└───────────────────────────────┘          └───────────────────────────────┘
              │                                          │
              ▼                                          │
┌───────────────────────────────┐                       │
│ Determine, based on a          │                       │
│ proximity-based analysis, a    │──438                  │
│ second candidate CoMP set      │                       │
│ including a list of NBS        │                       │
└───────────────────────────────┘                       │
              │                                          │
              └──────────────────┬───────────────────────┘
                                 ▼
```

```
┌─────────────────────────────────────────────┐
│ Associate the first candidate CoMP set and   │
│ the second candidate CoMP set with the UE    │──440
│ and the cell sector                          │
└─────────────────────────────────────────────┘
```

FIG. 4C

462

```
┌─────────────────────────────────────────────────────┐
│ Identify a UE and a cell sector associated with the  │──464
│ first and second candidate CoMP sets                 │
└─────────────────────────────────────────────────────┘
                          │
                          ▼
┌─────────────────────────────────────────────────────┐
│ Determine an NBS associated with the second candidate │──466
│ CoMP set based on the identified UE and the cell     │
│ sector                                                │
└─────────────────────────────────────────────────────┘
                          │
                          ▼
┌─────────────────────────────────────────────────────┐
│ Receive parameters associated with a neighbor cell   │──468
│ managed by the NBS                                    │
└─────────────────────────────────────────────────────┘
                          │
                          ▼
┌─────────────────────────────────────────────────────┐
│ Determine whether to include the NBS in an           │──470
│ intermediate CoMP set based on the parameters         │
└─────────────────────────────────────────────────────┘
                          │
                          ▼
┌─────────────────────────────────────────────────────┐
│ Associate the intermediate CoMP set with the target  │──472
│ UE                                                    │
└─────────────────────────────────────────────────────┘
```

**FIG. 4D**

470

FIG. 4E

**FIG. 5**: Example Computer System

Europäisches
Patentamt

European
Patent Office

Office européen
des brevets

# EUROPEAN SEARCH REPORT

**Application Number**

EP 16 15 4138

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/208581 A1 (ISHIDA HITOSHI [JP] ET AL) 16 August 2012 (2012-08-16) * paragraph [0090] - paragraph [0107]; figures 11-14 * ----- | 1,2,4-9, 11-15 | INV. H04B7/02 ADD. H04W28/16 H04W36/00 |
| X | US 2010/304682 A1 (CHOI HYUN HO [KR] ET AL) 2 December 2010 (2010-12-02) * paragraph [0122] - paragraph [0127]; figure 7 * * paragraph [0100] - paragraph [0111] * ----- | 1,3,8, 10,15 | |
| X | US 2015/257169 A1 (ZARIFI KEYVAN [CA] ET AL) 10 September 2015 (2015-09-10) * paragraph [0031] - paragraph [0047]; figures 1-9 * ----- | 1,8,15 | |
| X | US 2013/225189 A1 (MOON JUNG-MIN [KR] ET AL) 29 August 2013 (2013-08-29) * paragraph [0086] - paragraph [0108]; figures 9-13 * ----- | 1,8,15 | |
| X | CN 104 320 814 A (INST COMPUTING TECH CN ACADEMY) 28 January 2015 (2015-01-28) * abstract * ----- | 1,8,15 | TECHNICAL FIELDS SEARCHED (IPC) H04B H04W |

The present search report has been drawn up for all claims

| Place of search | Date of completion of the search | Examiner |
|---|---|---|
| Munich | 22 December 2016 | Gavin Alarcon, Oscar |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................
& : member of the same patent family, corresponding
document

EPO FORM 1503 03.82 (P04C01)

**EP 3 176 955 A1**

## ANNEX TO THE EUROPEAN SEARCH REPORT
## ON EUROPEAN PATENT APPLICATION NO.

EP 16 15 4138

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2016

| Patent document cited in search report | | Publication date | Patent family member(s) | | Publication date |
|---|---|---|---|---|---|
| US 2012208581 | A1 | 16-08-2012 | JP | 5379177 B2 | 25-12-2013 |
| | | | JP | 2012169741 A | 06-09-2012 |
| | | | US | 2012208581 A1 | 16-08-2012 |
| US 2010304682 | A1 | 02-12-2010 | KR | 20100128936 A | 08-12-2010 |
| | | | US | 2010304682 A1 | 02-12-2010 |
| US 2015257169 | A1 | 10-09-2015 | CN | 105474735 A | 06-04-2016 |
| | | | EP | 3114894 A1 | 11-01-2017 |
| | | | US | 2015257169 A1 | 10-09-2015 |
| | | | WO | 2015134983 A1 | 11-09-2015 |
| US 2013225189 | A1 | 29-08-2013 | KR | 20130099511 A | 06-09-2013 |
| | | | US | 2013225189 A1 | 29-08-2013 |
| | | | WO | 2013129877 A1 | 06-09-2013 |
| CN 104320814 | A | 28-01-2015 | NONE | | |

For more details about this annex : see Official Journal of the European Patent Office, No. 12/82